# EUROPEAN PATENT APPLICATION

(11) **EP 4 418 183 A1**
(43) Date of publication of application: **21.08.2024**
(21) Application number: 23156962.5
(22) Date of filing: 16.02.2023
(51) Int. Cl.: G06Q 10/0832, G06Q 10/0833, G06Q 50/28, A61J 9/02

(54) **AN INDICATOR SYSTEM FOR A PERISHABLE PRODUCT CONTAINER**

(71) Applicant: Koninklijke Philips N.V., 5656 AG Eindhoven (NL)
(72) Inventor: JOOSTEN, Franciscus Ivo, Eindhoven (NL)
(74) Representative: Philips Intellectual Property & Standards

(57) **Abstract**

A system is provided for indicating usage recommendations for s product (e.g. milk for a baby) stored in a container, and which takes account of perishable products stored in other containers. For example, the usage recommendation is whether the product is the most suitable for usage, out of a set of perishable products. The temperature is monitored, and temperature information (or data derived from that temperature information) from other containers is received. By comparing sensor data, the usage recommendation is provided, for example it is determined if the perishable product in the container should be the next to be used. The temperature information (or data derived from it) is preferably also sent to the other containers so that they can make similar determinations.

## Description

### FIELD OF THE INVENTION

This invention relates to storage of perishable products, for example the storage of expressed or formula milk in a container, such as a baby bottle for baby feeding. The invention in particular relates to an indicator system for use with such a container.

### BACKGROUND OF THE INVENTION

It is well known that breast milk is the best choice for feeding a baby. If a mother is not able to breast feed whenever the baby needs feeding, breast pumps are used to express milk to enable storage so that the baby can be fed at a different time. Breast milk is precious, so parents do not want to spoil or waste it. Thus, the milk has to be stored until the baby is to be fed, preferably chilled or frozen, as otherwise the storage time is limited.

The storage of milk in a fridge or freezer creates a problem of milk management, in particular which stored milk has to be fed when. Different storage temperatures give a different shelf life. There is for example a 6 - 6 - 6 rule used as a guideline, that breast milk goes bad after six hours at room temperature, six days in the fridge and six months in the freezer.

To enable this determination of the age of the stored milk, containers of stored breast milk are often identified by a day and even time of the day when the milk was expressed. Some common labeling methods include a label which is hand-made from masking tape, a manufactured adhesive labeling material, or a piece of paper held to the side of the container with a rubber band.

Masking tape and adhesive labels create a problem in that they must be overwritten or removed for reuse of the container. Rubber bands break or lose the attached note. Thus, there is a need for a more robust approach.

It is for example known to provide bottles with an electronic identification and then track the storage, and the associated expiration date, elsewhere. This is a complex system and does not enable simple identification of which milk has expired based on a simple quick view e.g. of the bottle.

It would be desirable to be able to determine which bottle of milk should be chosen for the next feed without a complicated app, labels or paper tracing system, and to know that the milk is not spoiled.

### SUMMARY OF THE INVENTION

The invention is defined by the claims.

According to examples in accordance with the invention, there is provided an indicating system for providing a usage recommendation for a perishable product stored in a container, which product is one of a set of perishable products, including other perishable products each stored in respective other containers with their own respective other indicating systems, comprising:
a sensor for collecting sensor data including a monitored temperature of the perishable product;
a receiving unit for receiving data from the indicating systems of the other containers;
a processor configured to:
   compare, based on the collected sensor data and the received data, thereby to determine a usage recommendation for the perishable product in the container; and
   an output device for indicating the usage recommendation.

This system provides advice to a user about the usage, e.g., consumption, of a perishable product, taking into account other perishable products also having indicating systems. For example, for an edible product, the indicating system indicates to a user when the contents of a particular container (of a set) is the one that should be consumed next. For a perishable product such as a medication (to be used rather than consumed), the indicating system indicates to a user when the contents of a particular container (of a set) is the one that should be used next. This avoids the need for the user to make any complicated calculations, and it avoids the need to fill in and apply labels or other markings.

In a preferred implementation, the indicating system at the location of the container itself provides an indication to the user. For example, with a set of containers, one will generate an output to show that the content is the next to be used. In this case, the output device may be a display unit such as an LED or LED arrangement at the container itself. This avoids the need to use an app.

However, in another implementation, the output device is a transmitter for transmitting the determination to a remote external display unit. The remote external display unit can for example identify the container that should next be used using a numbered system for the indicating system.

The system preferably further comprises a transmitting unit for transmitting data derived from the sensor data to the indicating systems of the other containers. In this way, the indicating systems of those other containers can also make comparisons, so that the multiple containers and associated indicating systems function as a network of communicating sensor systems.

The transmission may be wireless, or the containers may be connected by a common supporting cradle which provides electrical (wired) interconnection between the indicating units of the containers.

The processor may be further configured to determine from the sensor data if the perishable product is out of date. Thus, a warning can then be given by the output device that the content should no longer be used.

The processor may be further configured to determine from the sensor data if the perishable product can continue to be stored.

The indicating system and the respective other indicating systems for example form a mesh network. This means all the indicator systems can be the same, with no need for a master unit. This simplifies the implementation. It avoids the need to connect to an external network.

The indicating system and the respective other indicating systems are for example configured to communicate over the mesh network at predetermined intervals. This saves power.

The processor is for example configured to control the output device to indicate periodically the usage recommendation. This also saves power. Alternatively, the indication may be generated by an output device in the form of a bistable display element, so that power is only consumed when the output is changed.

The system is preferably a battery-operated system, comprising a battery for powering the sensor, transmitting unit, receiving unit, processor, and output device.

The processor is for example configured to determine a degree of spoiling based on the storage temperatures over time and associated time durations at those storage temperatures. For example, the storage temperature may indicate if the perishable product is being stored at room temperature, at fridge temperature or at freezer temperature. Each unit of time at these different temperatures (or different temperature categories) may then contribute different amounts of spoiling, and when a threshold is reached the perishable product may then be deemed to be spoiled.

The processor may be configured to determine that the perishable product should be the next to be used when it has the greatest degree of spoiling and not exceeding a spoiling threshold.

The system for example comprises an adapter for fitting to a milk storage bottle. Thus, the system is for monitoring milk storage, such as breast milk or formula milk. However, more broadly the invention may be applied to any perishable products to reduce wastage, by ensuring food or drinks are consumed before they are spoiled or other perishable products are used before they are perished.

The invention also provides a milk storage system comprising a milk container and the indicating system defined above, wherein the sensor is for monitoring the milk temperature. The system may be formed as an integral part of the container.

The invention also provides a monitoring system for monitoring perishable products stored in a set of containers, comprising a plurality of the indicating systems each as defined above, and each associated with a respective container.

The invention also provides a method for providing a usage recommendation for a perishable product stored in a container using an indicating system, which product is one a set of perishable products including other perishable products each stored in respective other containers with their own respective other indicating systems, comprising:
receiving sensor data including a monitored temperature of the perishable product;
receiving data from the indicating systems of the other containers;
comparing, based on the collected sensor data and the received data, thereby to determine a usage recommendation for the perishable product in the container; and
generating a usage recommendation.

The received data is for example information derived from the sensor data of other indicating systems. The comparing is for example a comparison between information derived from the local sensor data and the received information derived from the sensor data of the other indicating systems. This "derived information" is for example a level of freshness, i.e., a degree of spoiling.

The usage recommendation is preferably a determination that the perishable product in the container should be the next to be used.

The method may further comprise transmitting data derived from the sensor data to the indicating systems of the other containers.

The method may further comprise determining from the sensor data if the perishable product is out of date.

The invention also provides a computer program comprising computer program code means which is adapted, when said program is run on the processor of the indicating system defined above, to perform the method defined above. The invention also provides a processor for running the computer program.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a milk bottle and an adapter to function as an indicating system;
Fig. 2 shows in schematic form a set of milk bottles with integrated indicator units, connected to form a mesh network; and
Fig. 3 shows a method for indicating if a perishable product stored in a container is the most suitable for usage.

### DETAILED DESCRIPTION OF THE EMBODIMENTS

The invention will be described with reference to the Figs.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figs are merely schematic and are not drawn to scale. It should also be understood that the same reference numerals are used throughout the Figs to indicate the same or similar parts.

The invention provides a system for indicating usage recommendations for a perishable product (e.g., an edible product such as food or milk for a baby, or a perishable product such as a medication) stored in a container, and which takes account of perishable products stored in other containers. For example, the usage recommendation is whether the product is the most suitable for usage, out of a set of perishable products. The temperature is monitored, and temperature information (or data derived from that temperature information) from other containers is received. By comparing sensor data, the usage recommendation is provided, for example it is determined if the perishable product in the container should be the next to be used. The temperature information (or data derived from it) is preferably also sent to the other containers so that they can make similar determinations.

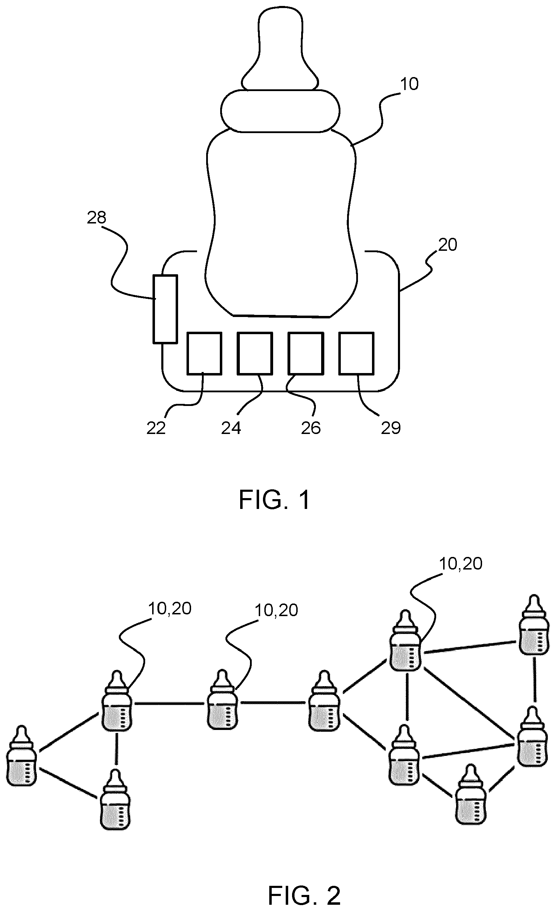

Fig. 1 shows a milk bottle and an adapter to function as an indicating system, in particular to provide guidance to assist a user in deciding when the contained milk should be consumed.

The milk bottle 10 in this example sits on an adapter 20 in the form of a base. The adapter functions as an indicating system. The indicating system comprises a sensor 22 which measures at least the temperature of the bottle (and hence the bottle content assuming a stable temperature) over time. Other sensors such as volume sensors measuring the volume of milk within in the container, or movement sensors measuring the movement of the bottle can be included.

A processor 24 receives the temperature measurement data (and other sensor data, if any) and has an internal timing device so that the temperature is monitored over time. A memory may be used to stored data over time, although it may simply store a current degree of spoiling as explained further below.

A transceiver 26 includes a transmitting unit for transmitting sensor data, or more particularly information derived from the sensor data, to the indicating systems of other containers and a receiving unit for receiving sensor data, or more particularly information derived from the sensor data, from the indicating systems of the other containers. Thus, information derived from the temperature monitoring data is shared between a set of indicating systems, with each indicating system associated with a respective container and hence a respective perishable product (i.e., a milk sample in this example).

Within each indicating system, the sensor data is collected, stored locally, and processed locally with an algorithm to determine the freshness level (referred to below as a "degree of spoiling"). The degree of spoiling at that moment is transmitted to the indicating system of all other containers. Based on the degree of spoiling of the other containers at that moment, the container can thus indicate if it is the preferred container for usage.

An output device 28 is used to indicate to a user the usage recommendation, which in preferred examples is that the content of a particular container should be consumed next. The output device may be display, or LED arrangement at the container adapter, but instead the output device may a communications system to communicate with a remote display device.

A battery 29 powers the electronics (sensor, processor, memory and output device).

The processor 24 controls the communication with the other indicating systems, and in one example this implements a mesh network. The processor runs a program which compares the data received from other containers (i.e., the degree of spoiling) with the locally derived degree of spoiling , and, based on the comparison determines if the container should be used for the next feeding installment.

The analysis of the locally collected sensor data also enables a determination of whether the perishable product is out of date or if it can continue to be stored.

The indicator system of each container in this way logs the temperature of the content and time duration that the content is in the container. The time durations at different temperatures may then be used to derive the degree of spoiling.

For example, a maximum score of 600 may indicate a minimum degree of spoiling. Every 1 hour at room temperature will result in an increase in spoiling equivalent to a deduction of 100 points. Every 1 day in the fridge and every 1 month in the freezer may then also equate to the same 100 points. In this way, the 6-6-6 rule mentioned above is applied, but in a manner which allows combinations of room temperature, fridge temperature and freezer temperature.

The temperature monitoring may be binned into three bins corresponding to room (e.g. 10 to 25 degrees), fridge (e.g. 0 to 10 degrees) and freezer (e.g. below 0 degrees). However, the actual temperature may be fed into a more accurate formula which applies weights to the measured temperature more finely.

In all cases, a degree of spoiling may be derived, and a threshold is reached when the perishable is product is spoiled (the threshold being zero in this example). Of course, the degree of spoiling may count up instead of down, e.g., from a minimum spoiling of zero to a maximum spoiling of e.g., 600.

When the degree of spoiling reaches the level corresponding to maximum spoiling, the content is spoiled, and should not be used. The indicating system will indicate this visually with for example a red LED or display.

The indicator systems share their degree of spoiling scores over the mesh network at regular intervals. Thus, each indicator system within the network knows the scores of the other indicator systems.

When an indicator system scores the highest degree of spoiling (the lowest score in the example above) but not exceeding the threshold (i.e. not negative in the example above), the output device indicates to the user it is the right container to pick for the present feeding instance.

By using a mesh network, the system is not dependent on an internet connection and server, which can be hard to achieve inside a freezer/fridge with the door closed, whereas the mesh network can work well within the freezer or fridge.

The system may be powered by single-use batteries or rechargeable batteries. While the battery efficiency will be reduced by the low temperatures in a freezer or fridge, they are be able to supply enough energy to power the electronics, especially as the electronics may use low-energy consuming components and may also work only at intervals.

A typical CR2032 coin cell is for example sufficient for such application and has an operating range from -30°C to +80°C.

When the output device comprises a local display device, it for example comprises a LED display. To save energy, the LED display may be activated only for a short period at intervals, for example every 10 seconds. Alternatively, the display may be a bistable display element, for example as used in e-readers. Such displays only need a short pulse of energy to change the information displayed on them.

If a remote external display device is used, the indicator systems at the containers may be clearly numbered, and the external display device can display the number of the indicator system that has been determined.

The indicator system is coupled to the container in use so that the local temperature is monitored. However, the indicator system is also removable for cleaning of the container. The indicator system may be attached externally to the container, as shown, but it may instead be incorporated as part of the design of the container, for example in an extra compartment at the bottom of the container that may be removable.

The indicator system may instead be carried by the bottle for example as a sleeve or label. In principle, the indicator system can also be provided inside the bottle, but this is less preferred as the electronics housing will then need to be designed to allow contact with the milk, and this adds cost and complexity.

The container may be any suitable perishable product container, for example made from plastics, glass, metal or silicone.

The indicator system may for example be able to detect when it is connected to a container, for example using a simple electrical or optical switch mechanism that is activated by the coupling between the indicator system and the container. When the indicator system is attached to the container, the system starts to count time. The system will then reset when it is removed from the container, typically when the container is warmed up and used, or cleaned.

The indicator system can also generate a signal that indicates that the battery needs to be changed, for example a blinking LED.

Fig. 2 shows in schematic form a set of milk bottles (which may be assumed to include integrated indicator units, not separately shown), connected to form a mesh network. Wireless communication is used, such as Bluetooth or Zigbee. In principle any other communications means may be used such as optical communication or high frequency audio but these have self-evident inherent disadvantages and are thus not preferred.

The mesh network does not need to communicate constantly, but could exchange information at regular intervals. The mesh network for example maintains connection in the background constantly, at regular intervals such as every few hundred milliseconds. The containers in the network will send their current degree of spoiling at regular interval such as every 10 seconds. When the indicator system of a particular container stops sending any degree of spoiling data, such that a given number of reports have been missed, the associated container may be removed from the comparison list.

A centralized network may also be used instead of the independent mesh network, such as based on Wi-Fi. When a centralized network is used it is then possible to perform the ranking of degree of spoiling centrally, for example on an App.

Other functions may be added. For example, the degree of spoiling, as well as a consumption amount, may be read out using an app (but still without requiring a centralized system). The consumption amount may be derived from the containers that are removed from the set because their content is being consumed. In the app, the user can also see the amount of milk added to the set of containers on a daily basis and the amount of consumption. The user thus can obtain a clear picture if more milk expression is required or if it should be reduced.

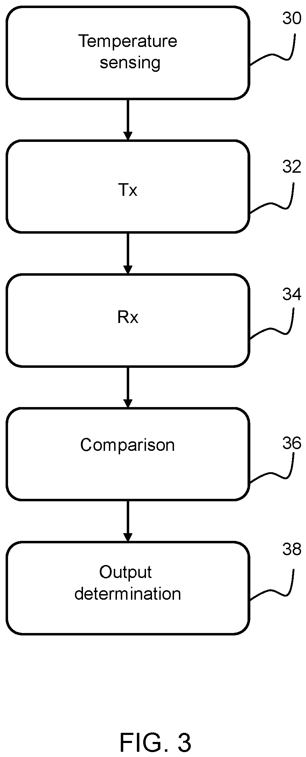

Fig. 3 shows a method for indicating if s product stored in a container is the most suitable for usage. The container is one of a set of containers, and each container has a respective indicating systems.

In step 30, local sensor data is collected including a monitored temperature of the perishable product over time.

In step 32, information derived from the sensor data (i.e., the degree of spoiling) is transmitted to the indicating systems of the other containers.

In step 34, data is received from the indicating systems of the other containers.

In strep 36, the collected sensor data is compared with the received sensor data thereby to determine if the perishable product in the container should be the next to be used.

The determination that the perishable product in the container should be the next to be used is output in step 38.

The invention is described with reference to a milk bottle. However, the invention may be applied to different perishable products. They may all be the same, but equally there may be different perishable products with different storage possibilities, and the system can then provide advice of which perishable products should be used to avoid them spoiling. In particular, by making a comparison between the degree of spoiling, different types of food product can be compared even if they have very different storage requirements and recommended durations. In this way, food storage can be managed to reduce food waste.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. An indicating system (20) for providing a usage recommendation for a perishable product stored in a container, which product is one of a set of perishable products, including other perishable products each stored in respective other containers with their own respective other indicating systems, comprising:
a sensor (22) for collecting sensor data including a monitored temperature of the perishable product;
a receiving unit (26) for receiving data from the indicating systems of the other containers;
a processor (24), configured to:
compare, based on the collected sensor data and the received data, thereby to determine a usage recommendation for the perishable product in the container; and
an output device (28) for indicating the usage recommendation.

2. The indicating system of claim 1, wherein the usage recommendation is a determination that the perishable product in the container should be the next to be used.

3. The indicating system of claim 1 or 2, further comprising a transmitting unit (26) for transmitting data derived from the sensor data to the indicating systems of the other containers.

4. The indicating system of any one of claims 1 to 3, wherein the processor (24) is further configured to determine from the sensor data if the perishable product is out of date.

5. The indicating system of any one of claims 1 to 4, wherein the system and the respective other indicating systems form a mesh network, and wherein the indicating system and the respective other indicating systems are configured to communicate over the mesh network at predetermined intervals.

6. The indicating system of any one of claims 1 to 5, wherein the processor (24) is configured to control the output device to indicate periodically the usage recommendation.

7. The indicating system of any one of claims 1 to 6, wherein the processor (24) is configured to determine a degree of spoiling based on storage temperatures over time and associated time durations at those storage temperatures.

8. The indicating system of claim 7, wherein the processor (24) is configured to determine that the perishable product should be the next to be used when it has the greatest degree of spoiling and not exceeding a spoiling threshold.

9. A milk storage system comprising a milk container (10) and the indicating system (20) of any one of claims 1 to 8, wherein the sensor is for monitoring the milk temperature.

10. A monitoring system for monitoring perishable products stored in a set of containers, comprising a plurality of the indicating systems (20) each as claimed in any one of claims 1 to 8, and each associated with a respective container.

11. A method for providing a usage recommendation for s product stored in a container using an indicating system, which product is one a set of perishable products including other perishable products each stored in respective other containers with their own respective other indicating systems, comprising:
(30) receiving sensor data including a monitored temperature of the perishable product;
(34) receiving data from the indicating systems of the other containers;
(36) comparing, based on the collected sensor data and the received data, thereby to determine a usage recommendation for the perishable product in the container; and
(38) generating a usage recommendation.

12. The method of claim 11, wherein the usage recommendation is a determination that the perishable product in the container should be the next to be used.

13. The method of claim 11 or 12, further comprising (32) transmitting data derived from the sensor data to the indicating systems of the other containers;

14. A computer program comprising computer program code means which is adapted, when said program is run on the processor of the indicating system of any one of claims 1 to 8, to perform the method of claim 12 or 13.

15. A processor adapted to implement the computer program of claim 14.
